# EUROPÄISCHE PATENTSCHRIFT

(11) **EP 0 872 674 B1**
(45) Veröffentlichungstag und Bekanntmachung des Hinweises auf die Patenterteilung: **30.07.2003**
(21) Anmeldenummer: 98106577.4
(22) Anmeldetag: 09.04.1998
(51) Int. Cl.: F16K 31/06, F16K 39/02

(54) **Druckausgeglichenes Magnetventil**
Pressure-compensated solenoid valve
Electrovanne avec compensateur de pression

(30) Priorität: 14.04.1997 DE 29706717 U
(43) Veröffentlichungstag der Anmeldung: 21.10.1998
(73) Patentinhaber: Bürkert Werke GmbH & CO., D-74653 Ingelfingen (DE)
(72) Erfinder: Hettinger, Gerhard, D-74653 Ingelfingen (DE)
(74) Vertreter: Degwert, Hartmut, Dipl.-Phys.

(56) Entgegenhaltungen:
- EP-A- 0 652 394
- EP-A- 0 681 128
- DE-A- 2 361 966
- DE-A- 2 835 749
- DE-A- 2 909 768
- DE-A- 3 643 318
- DE-B- 1 130 235
- US-A- 4 782 862
- US-A- 4 998 561

## Beschreibung

Die Erfindung betrifft ein Magnetventil mit einem Gehäuse, in dem ein Medieneinlaß un ein Medienauslaß gebildet ist.

Aus der EP-A-0 681 128 ist ein Ventil bekannt, das aus einem Gehäuse mit mindestens zwei Anschlüssen sowie einer Spule und einem in einem Hohlzylinder im Spulenkörper verschiebbar geführten Kern besteht, der mit dem Ventilkörper verbunden ist. Diesem Ventilkörper ist ein Ventilsitz zugeordnet. Der Kern hat entgegengesetzt angeordnete Stirnflächen und eine Mittelbohrung, die die Verbindung der Wirkräume herstellt. Dabei ist der Kern mit einer Dichtung versehen, um zwei Anschlußräume abzuteilen, wobei der Außendurchmesser der Dichtung dem Durchmesser des Ventilsitzes entspricht. Durch diese Maßnahme ist das Ventil druckausgeglichen. Der derart druckentlastete Kern, der die Sitzdichtung enthält, wird von der Kraft einer Schließfeder auf den fest mit dem Ventilgehäuse verbundenen Ventilsitz gedrückt.

Als nachteilig hat sich bei dem genannten Ventil erwiesen, daß der Hauptventilsitz am Ventilgehäuse angearbeitet ist und die elastische Sitzdichtung auf der beweglichen Seite des Kerns, der Membrane oder des Kolbens angebracht ist. Auf diese Weise ist es für eine druckentlastete Konstruktion notwendig, die Flächen sorgfältig aufeinander abzustimmen, dies ist, abhängig von Fertigungstoleranzen nie zu 100% möglich.

Ebenfalls bekannt sind hilfsgesteuerte Ventile, bei denen, eingeleitet durch die Betätigung eines Magneten, über Differenzdruckflächen und das Betriebsmedium Öffnungs- und Schließkräfte erzeugt werden. Zu diesem Zweck ist der Ventilkörper über ein Verbindungsstück mit dem Kern verbunden. Sobald die Spule den Kern erregt, wird in der ersten Bewegungsphase nur der Kern bewegt. Im zweiten Teil des Bewegungsvorgangs nimmt der Kern das Verbindungsstück mit dem Ventilkörper mit und öffnet das Ventil. Diese zweite Phase wird bei hilfsgesteuerten Ventilen in der Regel vom Druck des Mediums unterstützt, das durch eine Drosselbohrung in der Membran oder im Kolben in den entgegengesetzten Wirkraum oberhalb des Kolbens fließen kann und die magnetischen Kräfte unterstützt.

Bei geschlossenem Vorsteuerventil baut sich der Druck über die Drosselbohrung oberhalb des Kolbens auf. Das Hauptventil wird infolge einer größeren wirksamen Fläche oberhalb des Kolbens vom Druck des Mediums unterstützt durch die Kraft der Schließfedern geschlossen. Öffnet das Vorsteuerventil, so wird eine Entlastungsbohrung frei, die zum Druckabbau im Wirkraum oberhalb des Kolbens führt. Durch Kopplung des Magnetkerns mit dem Kolben wird dieser bei der Aufwärtsbewegung mit nach oben bewegt.

Als besonderer Nachteil bei diesen hilfsgesteuerten Ventilen hat sich herausgestellt, daß bei der Drosselbohrung die Gefahr des Verstopfens durch Schmutzpartikel oder z. B. bei Wasserventilen das Risiko des Zuwachsens dieser Bohrung durch Kalkablagerungen besteht. Auf diese Weise wird die Funktion des Ventils aufgehoben, darüber hinaus ist der Einsatz dieser Ventile auf wenige, möglichst gefilterte Medien beschränkt.

Aus der DE-B-11 30 235 ist ein Ventil mit einem in axialer Richtung beweglichen Verschlußstück bekannt. Nach Öffnen eines Vorsteuerventils bildet sich in einem zylindrischen Innenraum ein leichter Überdruck in Vergleich zu einem Abströmraum, der sich schwingungsdämpfend auf das Ventil auswirkt.

Aus der DE-A-28 35 749 ist ein schnellschaltendes Vorhubventil mit einem Magnetanker bekannt, der in einem von dem Vorhub-Entlastungsraum abgetrennten Raum angeordnet ist. Das Volumen des Magrietankerraums bleibt unverändert bei Öffnen des Ventils.

Durch die Erfindung wird ein preiswertes, haltbares und energiesparendes Ventil bereitgestellt, das die Vorteile eines direktwirkenden Ventils - sichere Schließfunktion bei Nulldruck und schnelles Öffnen des Ventils - mit den Vorteilen der Hilfssteuerung - Schalten höherer Drücke mit geringer magnetischer Kraft und sicheres Schließen - vereint.

Gemäß der Erfindung weist das Magnetventil einen durch eine Magnetspule entgegen einer Rückstellfeder beweglichen Kern, einen Hauptventilsitz und eine am Gehäuse angeordnete elastische Hauptsitzdichtung auf, wobei der Hauptventilsitz durch eine spitz auslaufende Dichtkante einer Sitzhülse gebildet ist, die am Kern in dessen Axialrichtung begrenzt beweglich gelagert ist. Die spitz auslaufende Dichtkante begrenzt eine auslaßseitig mit Medium beaufschlagte Wirkfläche, die so groß ist wie die von der Sitzhülse abgewandte Stirnfläche des Kerns. Bei dem erfindungsgemäßen Magnetventil wird die ganze zur Verfügung stehende Magnetkraft ausschließlich für den Öffnungsvorgang benutzt. Ferner wird ein mediumgestütztes, sicheres und verstärktes Schließen nach Abschaltung des Magneten erzwungen.

Bei dem erfindungsgemäßen Magnetventil wird die ganze zur Verfügung stehende Magnetkraft ausschließlich für den Öffnungsvorgang benutzt.

Darüber hinaus ist vorgesehen, daß die bei hilfsgesteuerten Ventilen in der Regel verwendete schmutzempfindliche Drosselbohrung durch offene Kanäle erzeugt wird, die durch die den Kern umhüllende Lippe einer robusten und temperaturunempfindlichen Nutringdichtung in Form geschlossener Rechtecke definiert wird. Durch diese Lösung wird vorteilhaft erreicht, daß die Hin- und Herbewegung des Kerns die Lippe der Nutringdichtung von belagsbildenden Verschmutzungen, z. B. Dampf, reinigt und so gewährleistet, daß die Funktion des Ventils nicht durch Ablagerungen an der Nutringdichtung bzw. in dem offenen Kanal beeinträchtigt wird.

Die auf diese Weise funktionierenden Ventile, die sowohl in Geradsitz- als auch in Schrägsitzbauweise hergestellt sein können, lassen sich universell für die Steuerung neutraler Medien wie Wasser und Gase einsetzen, wobei der Temperaturbereich nur von der Beständigkeit der Nutringdichtung begrenzt ist. Darüber hinaus sind diese Ventile in unterschiedlicher Werkstoffausführung, z. B. Kunststoffen wie PVC, PVDF, PEEK, auch für aggressive Medien oder in der Analysen- und Medizintechnik einsetzbar.

Aufgrund der vorgeschlagenen Anordnung wird eine vollständige Differenzdruckentlastung beim Sitzventil dadurch erreicht, daß die elastische Hauptsitzdichtung im Gehäuse befestigt ist und Sitz- und Ausgleichsdurchmesser durch Zusammenfassung in der bewegten Sitzhülse untergebracht sind.

In einer weiteren vorteilhaften Ausführungsform als Schrägsitzventil wird in das Gehäuse eine feste Kartusche mit Hauptsitzdichtung montiert. Sitz und Ausgleichsdurchmesser sind auch hier durch Zusammenfassung im bewegten Sitzrohr untergebracht.

Durch die Erfindung zur Verfügung gestellten Ventile können sowohl in 2/2- als auch in 3/2-Wegeventil ausgeführt sein.

Die Ausführung der Ventile ist dadurch gekennzeichnet, daß eine einfache Fertigung und Montage möglich ist, wodurch die Herstellungskosten reduziert werden. Ferner wird dem Anwender ein nahezu wartungsfreies, langlebiges Ventil zur Verfügung gestellt.

Die Erfindung ist nachstehend anhand von in den Zeichnungen dargestellten Ausführungsbeispielen näher erläutert. Es zeigen:
- Figur 1: in vergrößertem Maßstab einen Schnitt durch ein 2/2-Wege-Geradsitzventil,
- Figur 2: in vergrößertem Maßstab einen Schnitt durch ein 2/2 Wege-Schrägsitzventil.

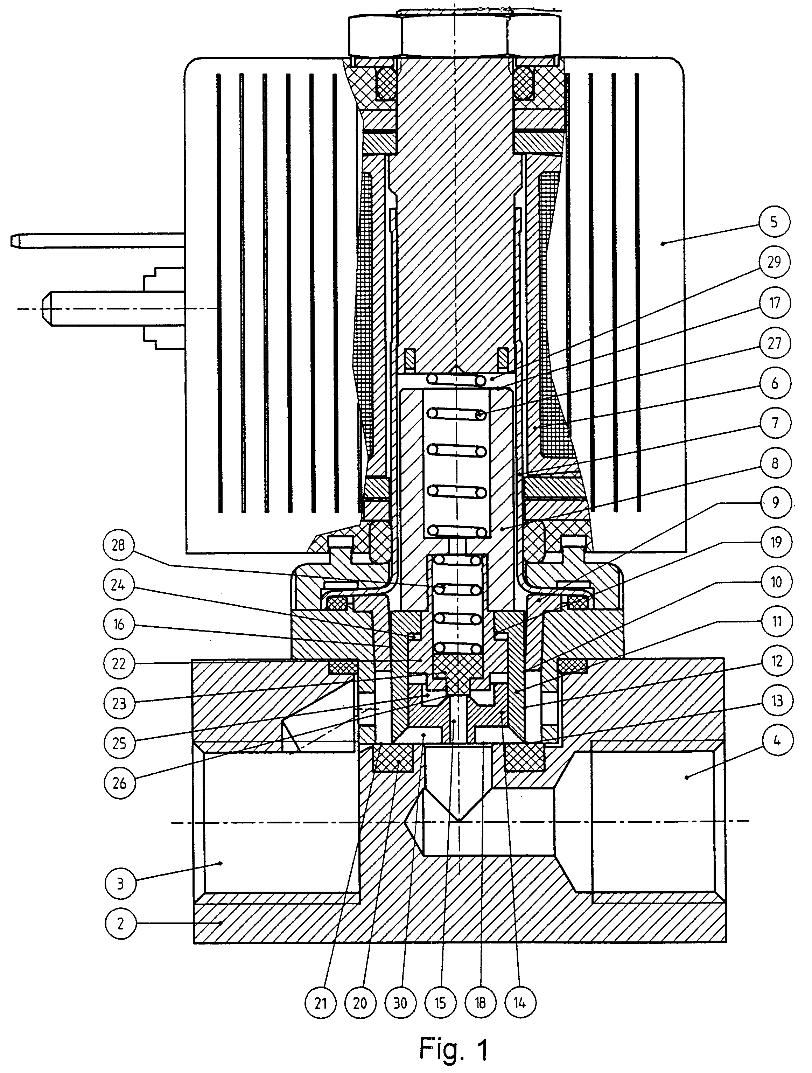

In Fig. 1 ist ein erfindungsgemäß ausgebildetes Geradsitzventil im geschlossenen Zustand im Querschnitt dargestellt. Das dargestellte Ventil 1 besteht aus einem Gehäuse 2 in dem ein Eingangsanschluß 3 und ein Ausgangsanschluß 4 vorgesehen sind, die durch einen Verbindungskanal 30 miteinander verbunden sind. Um den Ausgangsanschluß 4 ist in das Gehäuse radial die ringförmige elastische Hauptsitzdichtung 20 eingelassen. An dem Gehäuse 2 ist eine Spule 5 in einem Spulenkörper 6 angebracht, der innerhalb der Spule 5 einen Führungszylinder 7 enthält, in dem sich ein ebenfalls zylindrischer Kern 8 von der stromführenden Spule 5 erregt bzw. nach Abschalten der Spule 5 entregt, hin und her bewegen kann.

Eine Bohrung 31 im Inneren des Kerns 8 nimmt eine Feder 27 auf, die dazu dient, das Ventil 1 bei abgeschalteter Spule 5 in der Schließfunktion zu halten. Zwischen dem Kern 8 und dem Spulenkörper 6 dienen offene Kanäle 16 dazu, das Medium in den Wirkraum 29 über der Wirkfläche 17 des Kerns 8 gelangen zu lassen.

Der Kern 8 erstreckt sich in dem Zylinder 7 bis zu einem Verbindungsstück 22, das eine weitere Schließfeder 28 und die Ventilplatte 23 des Vorsteuerventils 31 enthält. Der Ventilplatte 23 direkt gegenüber ist ein Ventilsitz 26 an einem Ventilkörper 14 vorgesehen, der mit einer mittigen Bohrung 15 eine Verbindung zwischen dem Kanal des Vorsteuerventils 31 und dem Verbindungskanal 30 zwischen den Anschlüssen 3, 4 schafft. An den Kern 8 schließt sich nach unten eine dünnwandige rohrförmige Sitzhülse 11 derart an, daß zwischen dem Verbindungsstück 22 und einem Vorsprung 19 an der Oberkante der Sitzhülse 11 ein Zwischenraum 24 bleibt und die einen Teil des Verbindungsstücks 22, den Ventilkörper 14 des Vorsteuerventils und die Ventilplatte 23 mit der Sitzdichtung 26 des Vorsteuerventils 31 ringförmig umschließt. Die beweglich gelagerte Sitzhülse 11 läuft an ihrem unteren Ende in dem spitz auslaufenden Ventilsitz 13 aus und wird durch die Kraft der Federn 27, 28 auf die Hauptsitzdichtung 20 gepreßt. Die Wirkfläche 18 des Ventilsitzes 13 ist genau gleich groß wie die Wirkfläche 17 am oberen Ende des Kerns 8. Eine Nutringdichtung 9 umschließt die Sitzhülse 11, wobei sich eine Dichtlippe 10 an die Sitzhülse 11 schmiegt. Diese dient als Drosselung des Medienstroms.

Der Stromkreis der Spule 5 ist geöffnet, und das Ventil 1 wird allein durch die Kraft der Federn 27, 28 in der geschlossenen Stellung gehalten. Das Medium übt keine Kraft auf den Kern 8, das Verbindungsteil 22 und die Sitzhülse 11 aus, da die wirksame Fläche an der oberen Stirnseite 17 des Kerns 8 mit der wirksamen Fläche 18 innerhalb des Ventilsitzes 13 übereinstimmt.

Nach dem Schließen des Stromkreises der Spule 5 bewirkt die Erregung der Spule 5 in einem ersten Bewegungsabschnitt lediglich eine Bewegung des Kerns 8 und des Verbindungsteils 22. Die Bewegung hat zur Folge, daß der Zwischenraum 24 bis letztlich zum Anschlag des Vorsprungs 19 der Sitzhülse 11 gegen das Verbindungsstück 22 verringert wird. Ferner wird der Ventilsitz 26 des Vorsteuerventils 31 freigegeben, so daß das Medium durch die Bohrung 15 und den Verbindungskanal 30 in den Ausgangsanschluß 4 fließt.

Anschließend, nachdem der Vorsprung 19 der Sitzhülse 11 gegen das Verbindungsstück 22 zum Anschlag gekommen ist, nimmt dieses auch die Sitzhülse 11 mit dem Ventilkörper 14 des Vorsteuerventils 31 mit und gibt den Verbindungskanal 30 zum Anschluß 4 für das Medium frei. Das Ventil 1 ist bedingt durch die äquivalenten Wirkflächen 17, 18 druckausgeglichen geöffnet.

Das Abschalten der Spule 5 führt zu einem vollständigen, sicheren Schließen des Magnetventils 1, weil der Kern, der nicht mehr von magnetischen Kräften gehalten wird, durch die Schließfeder 27 und das Vorsteuerventil 31 durch die Feder 28 nach unten gepreßt werden und die beiden Ventilsitze 13, 26 sicher schließen.

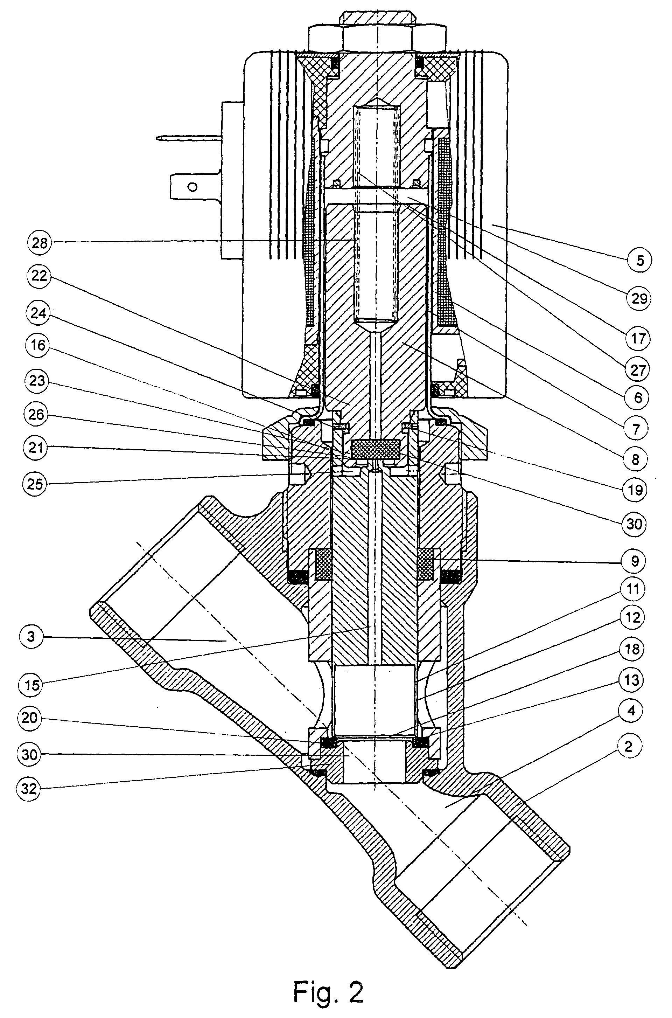

Fig. 2 zeigt eine Ausführungsform des erfindungsgemäßen Ventils 1 in Schrägsitzbauweise, wobei die Funktion des Ventils dem des in Fig. 1 beschriebenen Ventils in Geradsitzbauweise entspricht. Ergänzend erhält das Ventilgehäuse 2 eine Kartusche 32, die die Hauptsitzdichtung 20 aufnimmt.

## Patentansprüche

1. Magnetventil mit einem Gehäuse (2), in dem ein Medieneinlaß (3) und ein Medienauslaß (4) gebildet ist, und einem durch eine Magnetspule (5) entgegen einer Rückstellfeder (27) beweglichen Kern (8), einem Hauptventilsitz (13), einer am Gehäuse (2) angeordneten elastischen Hauptsitzdichtung (20), wobei der Hauptventilsitz (13) durch eine spitz auslaufende Dichtkante einer Sitzhülse (11) gebildet ist, die am Kern (8) in dessen Axialrichtung begrenzt beweglich gelagert ist, und wobei die spitz auslaufende Dichtkante eine auslaßseitig mit Medium beaufschlagte Wirkfläche (17) begrenzt, die so groß ist wie die von der Sitzhülse (11) abgewandte Stirnfläche des Kerns (8).

2. Magnetventil nach Anspruch 1, **dadurch gekennzeichnet, daß** die Sitzhülse (11) durch ein Verbindungsstück (22), das eine radiale Schulter als Anschlag für einen einwärts gerichteten Bund an der Sitzhülse (11) aufweist, mit dem Kern (8) gekoppelt ist.

3. Magnetventil nach Anspruch 1 oder 2, **dadurch gekennzeichnet, daß** die Sitzhülse (11) ein Vorsteuerventil umschließt.

4. Magnetventil nach Anspruch 1, **dadurch gekennzeichnet, daß** das Vorsteuerventil einen von der Sitzhülse (11) umschlossenen Ventilkörper (14), an dem ein Dichtsitz (26) gebildet ist, und einen federnd am Kern (8) abgestützten Dichtkörper (23) aufweist.

5. Magnetventil nach Anspruch 1, **dadurch gekennzeichnet, daß** der Dichtsitz (26) einen zum Medienauslaß (4) führenden Kanal (15) umschließt.

6. Magnetventil nach einem der vorstehenden Ansprüche, **dadurch gekennzeichnet, daß** der Kern (8) einen gedrosselten axialen Mediendurchgang zwischen seinen Stirnflächen aufweist.

7. Magnetventil nach einem der vorstehenden Ansprüche, **dadurch gekennzeichnet, daß** der Kern (8) von einer Dichtung (9) umschlossen ist, die einen gedrosselten Medienstrom zwischen einer mit dem Medieneinlaß (3) verbundenen Ventilkammer und der von ihr abgewandten Stirnfläche des Kerns zuläßt.

8. Magnetventil nach Anspruch 7, **dadurch gekennzeichnet, daß** die Dichtung (9) als Nutringdichtung mit einer die Sitzhülse (11) umschließenden Dichtlippe (10) ausgebildet ist.

9. Magnetventil nach einem der Ansprüche 1 bis 8, **gekennzeichnet durch** eine Ausführung in Geradsitzbauweise.

10. Magnetventil nach einem der Ansprüche 1 bis 8, **gekennzeichnet durch** eine Ausführung in Schrägsitzbauweise.

11. Magnetventil nach Anspruch 10, **dadurch gekennzeichnet, daß** in das Gehäuse (2) eine feste Kartusche (32) eingesetzt ist, welche die Hauptsitzdichtung (20) trägt.

12. Magnetventil nach einem der Ansprüche 1 bis 11, **dadurch gekennzeichnet, daß** es als 2/2-Wegeventil ausgeführt ist.

13. Magnetventil nach einem der Ansprüche 1 bis 11, **dadurch gekennzeichnet, daß** es als 3/2-Wegeventil ausgeführt ist.

## Claims

1. A solenoid valve, comprising a housing (2) in which is formed a media inlet (3) and a media outlet (4), a core (8) movable by a solenoid (5) against a return spring (27), a main valve seat (13) and an elastic main seat seal (20) arranged at the housing (2), the main valve seat (13) being formed by a tapered sealing edge of a seat bushing (11) which is supported at the core (8) for limited movement in the axial direction of the core, and the tapered sealing edge defining an effective surface (17) acted upon by the medium on the outlet side and equal in area to the end face of the core (8) facing away from the seat bushing (11).

2. The solenoid valve according to claim 1, **characterized in that** the seat bushing (11) is coupled to the core (8) by means of a connecting piece (22) which is provided with a radial shoulder to form a stop for an inward-pointing collar at the seat bushing (11).

3. The solenoid valve according to claim I or 2, **characterized in that** the seat bushing (11) surrounds a pilot valve.

4. The solenoid valve according to claim 1, **characterized in that** the pilot valve has a valve body (14) which is surrounded by the seat bushing (11) and at which a sealing seat (26) is formed, and has a sealing body (23) which is spring-supported at the core (8).

5. The solenoid valve according to claim 1, **characterized in that** the sealing seat (26) surrounds a channel (15) leading to the media outlet (4).

6. The solenoid valve according to any of the preceding claims, **characterized in that** the core (8) is provided with a throttled axial media passage between its end faces.

7. The solenoid valve according to any of the preceding claims, **characterized in that** the core (8) is surrounded by a seal (9) which allows a throttled media flow between a valve chamber connected with the media inlet (3) and the end face of the core facing away from it.

8. The solenoid valve according to claim 7, **characterized in that** the seal (9) is embodied as a groove and lip seal having a sealing lip (10) surrounding the seat bushing (11).

9. The solenoid valve according to any of claims I to 8, **characterized in that** it is embodied as a straight-seat valve.

10. The solenoid valve according to any of claims 1 to 8, **characterized in that** it is embodied as a slanted-seat valve.

11. The solenoid valve according to claim 10, **characterized in that** a fixed cartridge (32) carrying the main seat seal (20) is inserted in the housing (2).

12. The solenoid valve according to any of claims 1 to 11, **characterized in that** it is embodied as a 2/2-port directional control valve.

13. The solenoid valve according to any of claims 1 to 11, **characterized in that** it is embodied as a 3/2-port directional control valve.

## Revendications

1. Valve magnétique comportant un boîtier (2) dans lequel est formée une entrée de fluide (3) et une sortie de fluide (4), et un noyau (8) mobile par une bobine d'électroaimant (5) à l'encontre d'un ressort de rappel (27), un siège principal de valve (13), un joint de siège principal (20) agencé sur le boîtier (2), le siége principal de valve (13) étant formé par une arête d'étanchéité effilée d'une douille de siège (11) qui est montée sur le noyau (8) avec mobilité limitée dans sa direction axiale, et l'arête d'étanchéité effilée démitant une surface active (17) sollicitée par du fluide, qui est aussi grande que la face frontale du noyau (8) qui est détournée de la douille de siège (11).

2. Valve magnétique selon la revendication 1, **caractérisée en ce que** la douille de siège (11) est couplée au noyau (8) par une pièce de connexion (22) qui présente un épaulement radial servant de butée pour une collerette dirigée vers l'intérieur sur la douille de siège (11).

3. Valve magnétique selon la revendication 1 ou 2, **caractérisée en ce que** la douille de siège (11) entoure une valve de pilotage.

4. Valve magnétique selon la revendication 1, **caractérisée en ce que** la valve de pilotage présente un corps de valve (14) entouré par la douille de siège (11) et sur lequel est formé un siège d'étanchéité (26), et un corps d'étanchéité (23) en appui de manière élastique sur le noyau (8).

5. Valve magnétique selon la revendication 1, **caractérisée en ce que** le siège d'étanchéité (26) entoure un canal (15) conduisant vers la sortie de fluide (4).

6. Valve magnétique selon l'une des revendications précédentes, **caractérisée en ce que** le noyau (8) présente entre ses faces frontales un passage de fluide axial étranglé.

7. Valve magnétique selon l'une des revendications précédentes, **caractérisée en ce que** le noyau (8) est entouré par un joint (9) qui admet un flux de fluide étranglé entre une chambre de valve reliée à l'entrée de fluide (3) et la face frontale du noyau qui est détournée de celle-ci.

8. Valve magnétique selon la revendication 7, **caractérisée en ce que** le joint (9) est réalisé sous forme de joint à gorge avec une lèvre d'étanchéité (10) entourant la douille de siège (11).

9. Valve magnétique selon l'une des revendications 1 à 8, **caractérisée par** une réalisation sous forme de valve à siège droit.

10. Valve magnétique selon l'une des revendications 1 à 8, **caractérisée par** une réalisation sous forme de valve à siège incliné.

11. Valve magnétique selon la revendication 10, **caractérisée en ce que** dans le boîtier (2) est insérée une cartouche (32) fixe qui porte le joint de siège principal (20).

12. Valve magnétique selon l'une des revendications 1 à 11, **caractérisée en ce qu'**elle est réalisée sous forme de valve à deux voies et deux positions.

13. Valve magnétique selon l'une des revendications 1 à 11, **caractérisée en ce qu'**elle est réalisée sous forme de valve à trois voies et deux positions.
